# EUROPEAN PATENT APPLICATION

(11) **EP 1 078 828 A1**
(43) Date of publication of application: **28.02.2001**
(21) Application number: 00301189.7
(22) Date of filing: 16.02.2000
(51) Int. Cl.: B60R 22/48

(54) **Locking state detecting apparatus of vehicle's buckle**

(30) Priority: 23.08.1999 KR 9935044
(71) Applicant: Sungwoo Corporation, Seoul 137-070 (KR)
(72) Inventor: Do, Heon-Jeong, Seoul (KR)
(74) Representative: Browne, Robin Forsythe, Dr.

(57) **Abstract**

A locking state detecting apparatus of a buckle comprises a non-contacting switch or a mechanical switch mounted at the same time or in one type therein, in which the switch related to an electronic control unit includes a switching element and a control resistor for operating the switching element to enable the electronic control unit to recognize the voltage value formed by the control resistor according to its operating.

## Description

### Background of Invention

The invention is related to providing an apparatus for detecting the operating state of a vehicle and providing the detected signal to an electronic control unit (ECU) for controlling the operating of a vehicle, and particularly, to providing an apparatus for detecting the locking state of a buckle and generating a detected signal for the operation control of the vehicle.

### Prior art

A seat belt apparatus mounted in a vehicle is generally supposed to protect a driver and/or a passenger in colliding/clashing accidents, which includes a buckle fixed through a cable to one surface of a floor panel, a retractor fixed to the lower portion of a center pillar with a seat belt being wound thereon, a tongue hangs on a predetermined position of the seat belt to couple with the buckle, a guider for preventing the twisting during the releasing or retreating of the seat belt and an anchor for adjusting the height of the seat belt.

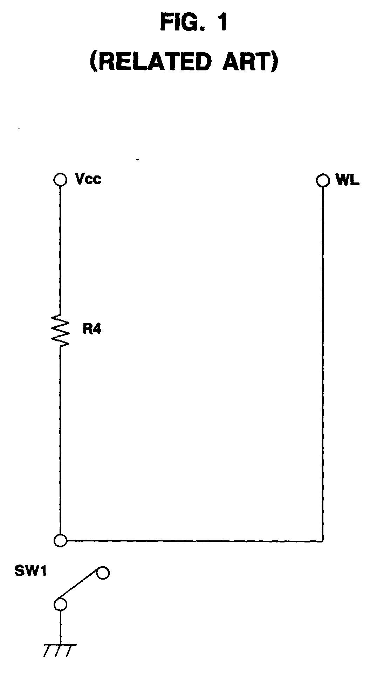

Fig. 1 shows a switching circuit provided with a conventional micro-switch SW1 which is mounted on the buckle to make a driver recognize the fact of whether he or a passenger wears a seat belt. The switching circuit controls the application of a power source VCC through a resistor R4 to a warning light WL mounted on an instrument panel so as to be lightened or put out, whenever the micro-switch is turned on or off dependent upon the insertion of the tongue into the buckle. In other words, if the driver or the passenger occupies the seat without wearing the seat belt, the micro-switch SW1 is subject to be turned on and the warning light WL warns the non-wearing of the seat belt to the driver with being put on. If the tongue is inserted into the buckle for the fastening of the seat belt, the micro-switch SW1 is turned off and the warning light WL is put out to notice the wearing of the seat belt to the driver.

But, the switch device has a simple configuration to indicate the operation of the warning light mounted on the instrument panel according to the fastening or unfastening of the buckle without including any connection with a control system of a vehicle. It means that the control system cannot recognize the abnormal state or operation state of the vehicle. For it, it is undesirable in light of having to pursuit the intelligence and automatization of the control system in the future. Therefore, it is preferable if the indications of all warning lights on the instrument panel are made by an electronic control unit (ECU) to enhance the efficiency of the vehicle control.

Furthermore, it has a disadvantage in that the switching device causes the high voltage discharge through the circuit short phenomena at the moment that the switching circuit is opened or closed by the mechanical contact of the micro-switch upon the fastening or non-fastening of the seat belt, which induces the electromagnetic interference (EMI) to the ECU, which results in taking a bad effect on the ECU.

### SUMMARY OF THE INVENTION

Accordingly, in order to resolve these disadvantages and problems, an object of the invention is to provide a locking state detecting apparatus of a seat belt buckle to enable an electronic control unit (ECU) to self-diagnose the control system of a vehicle.

Other object of the invention is to provide a locking state detecting apparatus of a seat belt buckle for detecting the locking state of the buckle and enabling other safety units, especially an airbag system cooperated with the buckle to be remained at an operation waiting mode.

Another object of the invention is to provide a locking state detecting apparatus of a seat belt buckle for enabling a micro-switch to detect the locking state of the buckle and to supply a detected signal with an electronic control unit (ECU) of a vehicle control system.

Therefore, the invention is adapted to the vehicle control system to prepare against the abnormal state of the vehicle, particularly the airbag system being ready to be operated against the abnormal state.

In order to accomplish these objects, the invention comprises a locking state detecting apparatus of a buckle for enabling a warning light provided in an instrument panel to confirm the matter of fastening the seat belt through the turning on or off of a micro-switch, in which the buckle further comprises an electronic switch for recognizing its locking state and generating the detected signal.

The locking state detecting apparatus comprises a micro-switch and an electronic switch, especially a hail sensor assembly mounted in a buckle to cooperate with a tongue for enabling an electronic control unit(ECU) to generate a signal for the locking state of the buckle and forcing the micro-switch to turn on or off a warning light in order to indicate whether or not the seat belt is fastened, in which the micro switch is connected to a control resistor to select a predetermined voltage value applied thereto and control its operation, and the electronic switch includes a switching element and a control resistor for controlling its operation in order to enable the electronic control unit to recognize the value of the control resistor according to the operation of the switching element.

The locking state detecting apparatus further comprises the hail sensor assembly instead of the micro-switch, in which the electronic control unit is connected in turns to a switching element and a control resistor to recognize the voltage value formed by the control resistor, when the hall sensor assembly is operated and further comprises at least one resistor having a larger resistance value to identify the voltage value formed by the control resistor and the other resistor directly connected to the control resistor during the non-operating of the hall sensor assembly.

### BRIEF DESCRIPTION OF THE INVENTION

The invention now will be described in detail with reference to the accompanying drawings, in which:
Fig. 1 is a circuit containing a micro-switch of a prior art;
Fig. 2 is an upper cross-sectional view showing the non-operating state of a micro-switch and a hall sensor assembly before the insertion of a tongue into a buckle;
Fig. 3 is an upper cross-sectional view showing the operating state of the micro-switch and the hall sensor assembly before the insertion of the tongue into the buckle;
Fig. 4 is a perspective view illustrating the operating state of the hall sensor assembly;
Fig. 5 is a circuit diagram illustrating a locking state detecting apparatus for a buckle, in which the micro-switch and the hall sensor assembly are mounted together according to the invention;
Figs. 6A and 6B are respectively circuit diagrams illustrating the locking state detecting apparatus of the buckle including the micro-switch according to the invention;
Fig. 7 is a circuit diagram illustrating the locking state detecting apparatus of the buckle including the hail sensor assembly according to another embodiment of the invention; and
Fig. 8 is a circuit diagram illustrating the locking state detecting apparatus of the buckle including the hall sensor assembly according to another embodiment of the invention.

### DETAILED DESCRIPTION OF THE INVENTION

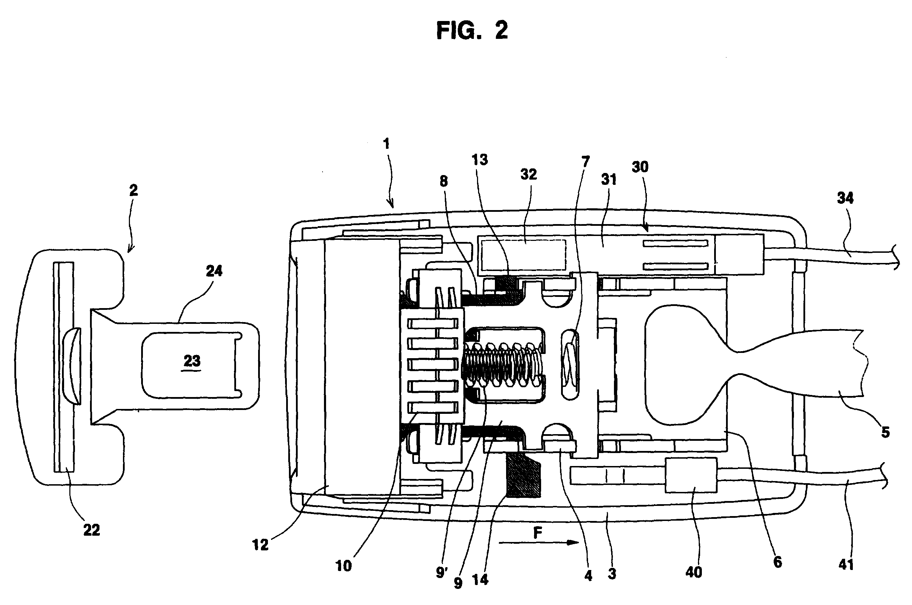

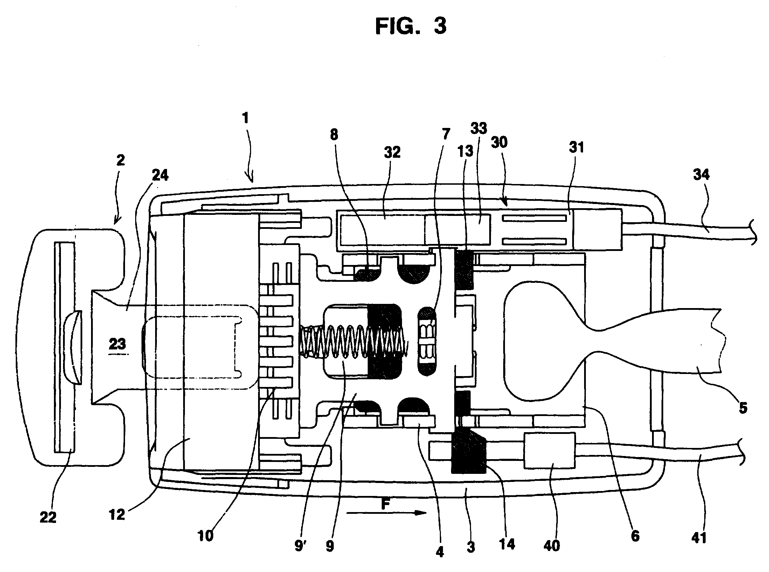

Referring to Figs. 2 and 3, a buckle assembly comprises a buckle 1 and a tongue 2. The buckle 1 is constructed to prevent the escape of the tongue 2 when inserted into a housing 3. A frame 4 is properly positioned in the housing 3 in a manner that a supporter 6 is fixed to the rear end of the housing 3 and connected to a fixing member 5 which is coupled with the inner portion of a vehicle. An ejector 8 is inserted into the lower portion of the frame 4, which is supported by a spring 7 in a hole as not shown. The ejector 8 is moved rearward in an arrow direction F when the tongue 2 is inserted into the buckle 1. A latch 9 is positioned on the upper portion of the frame 4. A block 10 is mounted on the front end of the latch 9 to be elastically supported by a spring 9' and cooperated with a button 12, so that the latch 9 is moved upward and downward to refrain or release the tongue 2 according to the insertion into or withdrawal out of the tongue 2 into the buckle 1. Further, the ejector 8 includes extending portions 13 and 14 projected from both sides of the frame 4 to be slidably moved. A micro-switch 40 and a hall sensor assembly 30 are properly arranged adjacent to both sides of the frame 4, in which the micro-switch 40 includes a cable 41 which may be selectively connected to the electronic control unit or a warning light and a power source. The tongue 2 includes a hole 22 formed at the rear portion to be coupled with a web as not shown and an inserting portion 24 at the front portion to be inserted into buckle 1, in which the inserting portion 23 has a hole 24 formed to be locked with the latch 9.

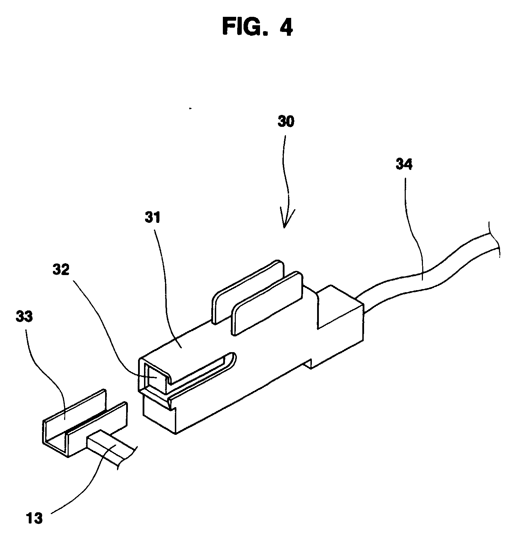

Referring to Fig. 4, the hall sensor assembly 30 comprises a body 31 properly mounted adjacent to one side of the frame 4, in which a hall sensor and a printed circuit board constituted as a detecting circuit for detecting the locking state of the tongue 2 and providing a detected signal to the electronic control unit are properly mounted. Herein, it is noted that the hall sensor includes a permanent magnet 32 and a hall effect member arranged to face a permanent magnet 32, but for the purpose of simplifying the explanation of the detecting circuit, the hall effect member now will be called a hall sensor 35. An U-shaped slider 33 connected to the extending portion 13 of the ejector 8 is arranged in the body 31 to surround the lower portion of the permanent magnet 32 and to be slidably moved along with the ejector 8 with being connected to the extending portion 13. The hall sensor assembly 30 is positioned adjacent to the frame 4 as shown in Figs. 2 and 3. A cable 34 is connected to the electronic control unit and the power source for the hall sensor 35 and the detecting circuit (not shown).

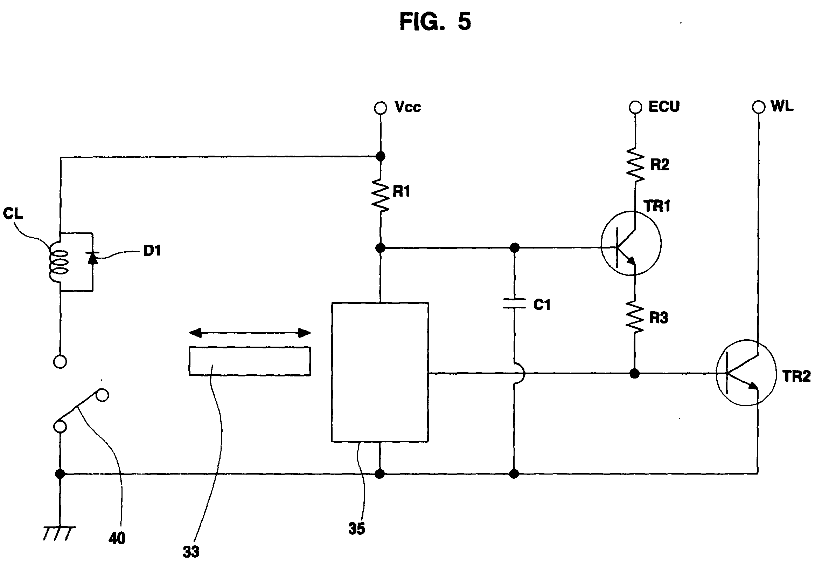

Therefore, as the inserting portion 24 of the tongue 2 is inserted into a hole of the frame 4 in the buckle 1, the ejector 8 is moved in an arrow F. Then, the latch 9 is moved downward along with a block 10 to cause its lower end to be inserted in the hole 23 of the insertion portion 24, thereby coupling the tongue 2 with the buckle 1. At the same time, the extending portion 13 subject to be moved along with the ejector 8 cause the U-shaped slider 33 surrounding the lower portion of the permanent magnet 32 to be moved into the body 31, so that the hall sensor 35 is directly faced to the permanent magnet 32 in order to be energized, which means the hall sensor assembly 30. At the same time, the extending portion 14 turns off the micro-switch 40 (referring to Fig. 5).

Thereafter, as the button 12 is pressed, the block 10 is moved rearward, while the latch 9 is moved upward to be returned to the original position, so that the tongue 2 is freely withdrawn out of the buckle 1. At that time, the U-shaped slider 33 interrupts or separates the hall sensor 35 from the permanent magnet 32 to operate the hall sensor assembly 30 while to turn on the micro-switch 40. As described above, the hall sensor assembly 30 and the micro-switch 40 are constituted as a part of a circuit for detecting the locking state of the buckle 1, which is a buckle locking state detecting apparatus according to the invention.

According to the invention, as shown in Fig. 5, the buckle locking state detecting apparatus may comprise the hall sensor assembly 30 and the micro-switch 40 together in the control circuit. First, it is noted that an electronic control unit ECU and a warning light WL are initiated at a low voltage level, for example below D.C. 5V which is applied to one end of the buckle locking state detecting apparatus.

The electronic control unit ECU is connected through a resistor R2 to the collector of a transistor TR1. The transistor TR1 has an emitter connected through a resistor R3 to the base of a transistor TR2 and a base connected through a resistor R1 to a power source VCC and through a condenser C1 to the ground. The transistor TR2 is grounded at the emitter, at a base to a hall sensor 35 and at the collector to the warning light WL.

The micro-switch 40 is connected through a coil CL and a diode D1 coupled in parallel to each other to the power source VCC and grounded at the other end. The hall sensor 35 is connected through the resistor R1 to the power source VCC and through the condenser C1 to the base of the transistor TR1, at the outputting terminal to the base of the transistor TR2 and at the other end to be grounded.

The buckle locking state detecting apparatus during the non-locking state of the buckle 1 is subjected to force the voltage of the power source VCC to apply through the resistor R1 to the transistors TR1 and TR2. As the transistor TR1 is turned on, the low level voltage applied to the terminal of the electronic control unit ECU turns on the transistor TR2 through the resistor R3, and then the warning light WL is changed into the low level voltage at its one terminal WL in order to be turned on and warns the non-fastening state of the seat belt. At that time, the electronic control unit ECU cannot recognize the resistance value of the resistor R3 with being floated.

On the contrary, when the tongue 2 is inserted into the buckle 1 to turn off the microswitch 40 and to force the permanent magnet 32 to directly face the hall sensor 35 through the movement of the slider 33, the hall sensor 35 is energized to force the power source VCC through the resistor R1 to turn on the transistor TR1 and then apply the low level voltage from the terminal ECU of the electronic control unit through the hall sensor 35 to the ground. At that time, the electronic control unit confirms the resistance value of the resistors R2 and R3, while the transistor TR2 forces the warning light WL to be turned off with being floated.

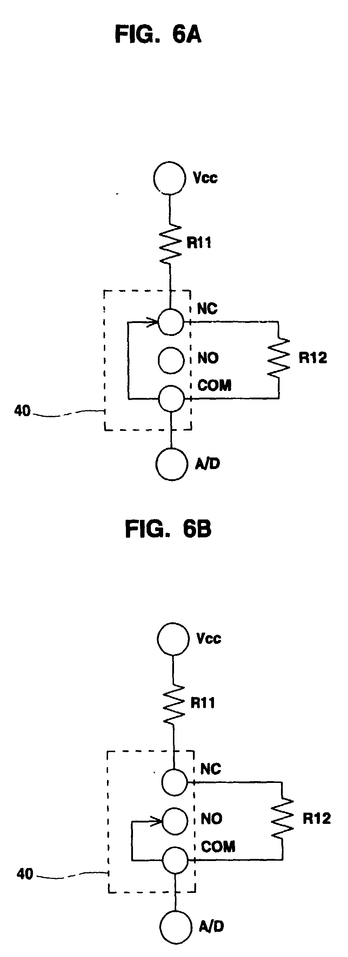

According to another embodiment of the invention, the micro-switch 40 adapts SPDT type of break, make or operation having one throw and two contacting arm, which may be directly connected to the terminal ECU instead of the hall sensor assembly 30 as shown in Figs. 6A and 6B. The micro-switch 40 has three terminals including a neutral terminal NO, among which a control terminal NC is connected through a power resistor R11 to the power source VCC and a common terminal COM is related to the analog/digital terminal A/D of the electronic control unit. A control resistor R12 having a larger resistance value than the resistor R11 is connected between the terminals NC and COM.

Therefore, the micro-switch 40 gets turned on during the non-locking of the buckle 1, so that the control terminal NC and the common COM are connected to the power source VCC. The voltage of the power source VCC is applied through the resistor R11 to the analog/digital terminal A/D. At that time, the electronic control unit recognizes the resistance value of the power resistor R11 thereby to apply the high level voltage to the terminal A/D.

If the buckle 1 is locked, the micro-switch 40 is switched to force the neutral terminal NO to be connected to the common terminal COM, so that the voltage of the power source VCC is applied through the resistors R11 and R12 to the analog/digital terminal A/D thereby to apply the low level voltage to the terminal ECU. At that time, the electronic control unit recognizes the resistance values of the power resistor R11 and the control resistor R12. Therefore, the micro-switch 40 forces the electronic control unit to detect the locking state of the buckle 1.

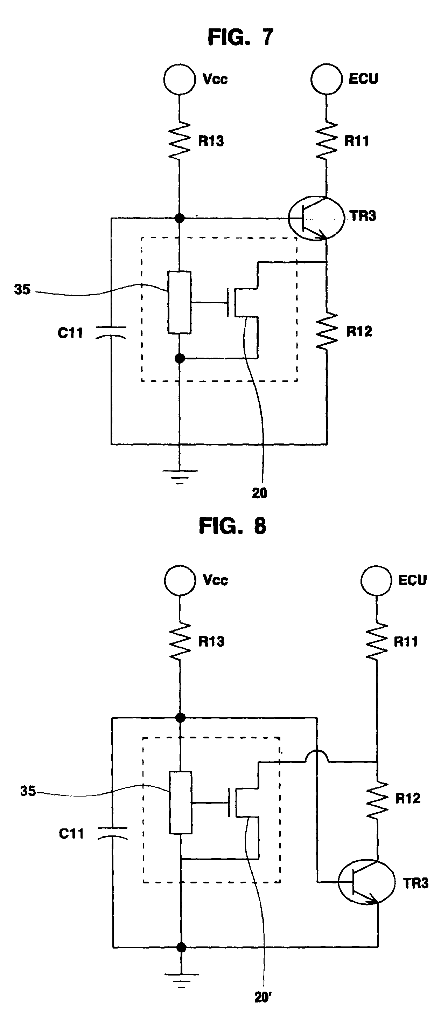

Referring to Figs. 7 and 8, another embodiments of the invention are illustrated. The hall sensor assembly 30 further comprises a FET (Field Effect Transistor) 20 to enhance the reliability of the detecting apparatus.

As shown in Fig. 7, the hall sensor 35 is connected at the output terminal to the gate of the FET 20, at the input terminal through a resistor 13 to the power source VCC and at the other terminal to the ground. The transistor TR3 is connected at the base through the resistor R13 to the power source VCC and through a condenser C11 to the ground. And, the collector is connected through a resistor R11 to the electronic control unit ECU and the emitter is grounded through a resistor R12. The FET 20 has a drain grounded and a source connected between the emitter of the transistor TR13 and the resistors R12.

On the other hand, as shown in Fig. 8, the FET 20' has a source connected between the resistors R11 and R12, and the transistor TR3 is connected through the resistors R11 and R12 in series to the power source VCC and the emitter is grounded.

The embodiments have a little difference from each other, but the operating method of enabling the hall sensor assembly 30 to generate a detecting signal indicating the buckle locking state and to provide it to the terminal ECU of the electronic control unit is the same.

In other words, if the buckle is not in the locking state, the hall sensor 35 is interrupted from the permanent magnet 32 to force the power source VCC through the resistor R13 to trigger the transistor TR3. Then, the electronic control unit connected to the terminal ECU reads the voltage value formed by the resistors R11 and R12 as shown in Figs. 7 and 8. And, the electronic control unit becomes disabled because the high level voltage is applied to the terminal ECU.

If the buckle is in the locking state, the hall sensor 35 is operated to trigger the gate of the FET 20 or 20', so that its drain and source are excited. Therefore, the electronic control unit recognizes only the resistance value of the power resistor R11, whereby the low level voltage is applied to the terminal ECU, resulting in detecting the locking state of the buckle 1.

As described above, according to the invention, a buckle locking state detecting apparatus enables the electronic control unit to scan the voltage value formed by resistors connected thereto according to the wearing or non-wearing of a buckle, thereby giving further more stabilized reliability in detecting the locking state of the buckle. Also, other non-contacting type of electronic switch such as an optical sensor can be used to enhance the reliability of the buckle locking state detecting apparatus.

## Claims

1. An apparatus for detecting the locking state of a buckle, in which a micro switch or an electronic switch is mounted, is characterized in that:
the micro-switch and the electronic switch are mounted in the buckle, in which the micro-switch includes a control resistor to select a voltage value applied thereto, and the electronic switch related to an electronic control unit includes a switching element and a control resistor for controlling the operation of the switching element, so that the electronic control unit recognizes the voltage value formed by the control resistor according to the operating of the switching element.

2. The locking state detecting apparatus of the buckle as claimed in Claim 1, in which:
the electronic switch is constituted as a part of a hail sensor assembly, the switching element of the hall sensor assembly includes at least two control resistors connected to one end and/or both ends thereof, so that the electronic control unit recognizes the voltage values generated by the control resistor, selectively.

3. The locking state detecting apparatus of the buckle as claimed in Claim 2, in which:
the hall sensor assembly includes a hall sensor for forcing a slider to be interrupted from and face a permanent magnet in order to be turned on or off, in which the slider is slidably moved by an ejector cooperated with a tongue of the buckle.

4. The locking state detecting apparatus of the buckle as claimed in Claim 1, in which:
the micro-switch is connected to the electronic control unit and includes control resistors connected to both ends thereof, so that the power source is applied through the control resistors thereto, thereby enabling the electronic control unit to recognize the voltage value generated by the control resistors, selectively.

5. The locking state detecting apparatus of the buckle as claimed in Claim 1, in which:
the switching element is a transistor and/or a FET.
